# EUROPEAN PATENT SPECIFICATION

(11) **EP 2 406 990 B1**
(45) Date of publication and mention of the grant of the patent: **04.04.2018**
(21) Application number: 09805943.9
(22) Date of filing: 21.12.2009
(51) Int. Cl.: H04W 48/18

(54) **AN ACCIDENTAL ROAMING PREVENTION SYSTEM**
SYSTEM ZUR VERHINDERUNG VON VERSEHENTLICHEM ROAMING
SYSTÈME DE PRÉVENTION D'ITINÉRANCE ACCIDENTELLE

(30) Priority: 30.12.2008 TR 200810016
(43) Date of publication of application: 18.01.2012
(73) Proprietor: Turkcell Teknoloji Arastirma & Gelistirme A.S., 41470 Kocaeli (TR)
(72) Inventor: OKUROGLU, Bahri, 41470 Kocaeli (TR)
(74) Representative: Carangelo, Pierluigi
(86) International application number: PCT/IB2009/055882
(87) International publication number: WO 2010/076732

(56) References cited:
- EP-A1- 1 903 828
- WO-A2-2004/014101
- US-A1- 2006 135 160
- US-A1- 2008 026 767
- US-B1- 6 643 511
- US-B1- 7 440 756

## Description

### Field of the Invention

The present invention relates to an accidental roaming prevention system which prevents GSM (Global System for Mobile Communications) subscribers from accidentally receiving service from the operators of the neighboring countries while they are within the borders of their home countries.

### Prior Art

In GSM networks, all information of the subscribers is stored in nodes called HLR (Home Location Register). In each region of the GSM network, there are MSC (Mobile Switching Center) and VLR (Visitor Location Register) nodes which keep a record of the subscribers located in their serving region and provide service to them. To each MSC a different number of BSC's (Base Station Controller) and to each BSC a different number of BSS's (Base Station Subsystem) are connected.

For the mobility of the subscriber in HPLMN (Home Public Land Mobile Network), when a subscriber terminal wants to receive service from a new VLR belonging to the operator providing the service, VLR informs HLR of the subscriber that the subscriber is located in the service area of the VLR. If HLR confirms the registration of the subscriber to this VLR, it changes the active VLR information recorded in the database for the subscriber whereby ensuring that the new calls are sent to the said VLR. This mobility architecture is defined with GSM standards and the message sent by the VLR to the HLR regarding the location of the subscriber is an UpdateLocation MAP (Mobile Application Part) message.

Operators make roaming agreements with each other in order to enable GSM subscribers to receive service outside their home countries. Within the scope of these agreements, operators of the foreign countries provide service to subscribers on behalf of the HPLMN of the subscribers.

A flow similar to local mobility is also followed in international roaming. When the subscriber terminal notices that it is not within the coverage of the HPLMN of the SIM (Subscriber Identity Module) card, it selects one of the GSM networks having coverage with certain algorithms and tries to receive service from that network. If the selected network has a roaming agreement with the original operator, upon this request of the subscriber terminal, the foreign network VLR sends an UpdateLocation message to the HLR of the original operator. HLR accepts or rejects this request as a result of certain controls such as whether or not the SIM card of the subscriber terminal has international roaming enabled in advance.

Since coverage of the foreign operators may also exist within the national boundaries around the border areas, it is possible for the subscribers to accidentally and unintentionally receive service from the operators of the neighboring countries due to geographical conditions and to the instant problems occurring in the HPLMN. When this is not noticed by the subscriber, it may lead to subscriber complaints due to the bill shocks as international calls are more expensive.

Companies providing solutions for these problems offer this as an additional service of the "Steering of Roaming" products which enable them to select the operator to which they will provide service abroad. For this, the operators of the neighboring countries are classified as unpreferred operators and the subscriber is tried to be prevented from receiving service from these operators. This approach in fact does not notice accidental roaming attempts and approaches all the roaming requests coming from the neighboring countries with a possibility of accidental roaming.

There are systems developed for these problems by the companies producing international roaming solutions for GSM networks. One of these systems is disclosed in the European patent document EP1903828. The system defined in the said document is comprised of two parts. The first one of these is the roaming detector. The roaming detector determines whether or not a subscriber terminal roams at a border area. The second part is the output unit. The output unit transmits the registration rejection signal to the mobile networks. Until the subscriber telephone sends an update location signal to its own network, a rejection signal is sent to the mobile networks.

United States patent document no. US2006/135160 A1, an application in the state of art, presents a system and method for attempting to register a subscriber to a Home Public Mobile Network (HPMN), wherein the subscriber is in a region having multiple overlapping wireless cellular networks. The invention detects potential registration of the subscriber with a Neighboring visited Public Mobile Network (NPMN), although the HPMN may be present in the region, in response to a registration request from the NPMN and attempts a pre-defined number of rejections upon successful detection.

International patent document no. WO2004/014101 A2, an application in the state of art, discloses a system and apparatus for redirecting wireless network traffic. Embodiments include determining when a roaming mobile station (204) initiates a registration attempt with a non-preferred network (506) and causing the roaming mobile station to initiate a registration attempt with a preferred network (504). Embodiments further include a traffic redirection network entity including a traffic redirection node (102b), a traffic redirection application (102c), and a traffic redirection probe. Embodiments also include redirecting traffic after a mobile station has registered with a non-preferred network.

### Summary of the Invention

The objective of the present invention is to realize an accidental roaming prevention system which enables detecting subscriber terminals unintentionally roaming at border regions or passing through border gates, as claimed in independent claim 1. Another objective of the invention is to realize an accidental roaming prevention system wherein requests of subscribers, who are determined to have a possibility of accidentally receiving service from the operators of neighboring countries, are intervened according to the configured parameters and are either rejected or accepted.

### Detailed Description of the Invention

The accidental roaming prevention system which is realized to fulfill the objectives of the present invention is illustrated in the accompanying figures wherein:
Figure 1 is the schematic diagram showing the position of the inventive accidental roaming prevention system in the entire network.
Figure 2 is the schematic diagram of the inventive accidental roaming prevention system.

The parts in the figures are each given a reference numeral where the numerals refer to the following:
1. Accidental roaming prevention system
2. Subscriber location and state detection unit
3. Neighboring country border region monitoring unit
4. Neighboring country border region detection unit
5. Roaming monitoring and intervention unit
6. Home Location Register (HLR)
7. Local network
8. International network
9. , 91. Visitor Location Register (VLR)
10. Foreign network
11. Subscriber terminal
12. Neighboring country border region database
13. Main network border visitor location register
14. Subscriber information database

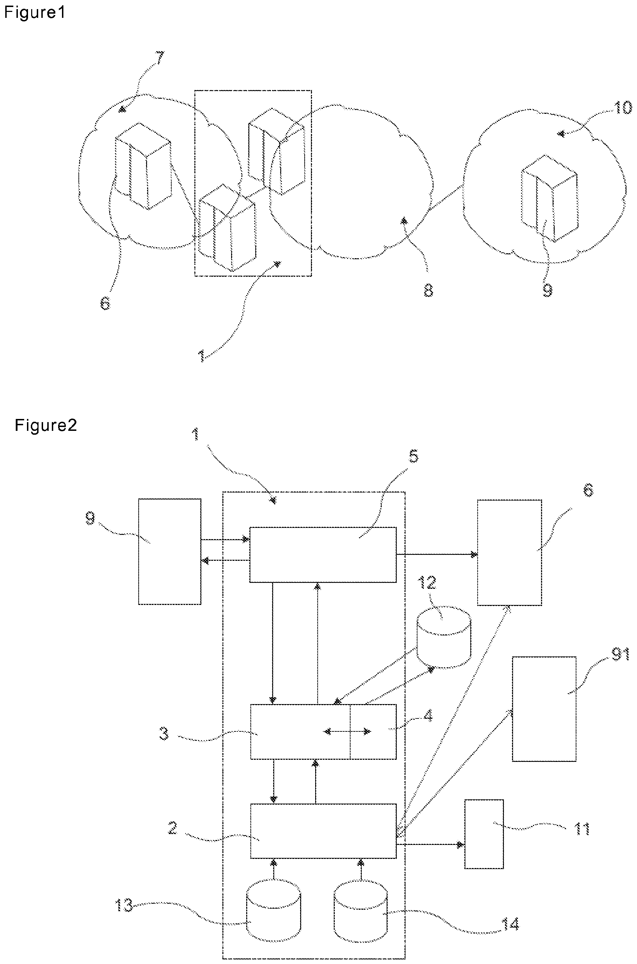

The inventive accidental roaming prevention system (1) is provided between the international network (8), which is the international gateway of the operator, and the local network. The international network (8) interconnects the local network (7) and the foreign network (10) (Figure 1).

The local network (7) denotes the SS7 (Signaling System 7) network used by the service providing local operator.

The international network (8) denotes the international SS7 (Signaling System 7) network.

The foreign network (10) denotes the SS7 (Signaling System 7) network used by the foreign operators in the neighboring countries.

The inventive accidental roaming prevention system (1) comprises a subscriber location and state detection unit (2), a neighboring country border region monitoring unit (3), a neighboring country border region detection unit (4) and a roaming monitoring and intervention unit (5), a main network border visitor location register (13) and a subscriber information database (14) (Figure 2).

The subscriber terminal (1) is a mobile device such as a mobile phone or laptop computer having a SIM card which receives service from the network at which the operator provides service.

The neighboring country border region database (12) comprises the list of the border visitor location registers (9) of the operators of the neighboring countries.

The main network border visitor location register (13) comprises the main network border visitor location (VLR) list.

The subscriber information database (14) contains the telephone number (MSISDN-Mobile Station International ISDN Number) information corresponding to the IMSI (International Mobile Subscriber Identity) information of the subscribers.

The inventive accidental roaming prevention system (1) checks the possibility of the subscriber terminal (11) accidentally and unintentionally receiving service from the operators of the neighboring countries.
- If the visitor location register from which the subscriber terminal (11) intends to receive service is located in the neighboring country border region (101),
- if the last location of the subscriber terminal (11) is within the border area of the local network (7) (102) and
- if the last state of the subscriber terminal (11) shows that the telephone is not turned off (103),
it means that there is a possibility of the subscriber terminal (11) accidentally receiving service from the operators of the neighboring countries and the accidental roaming prevention system (1) tries to prevent the accidental roaming within the configured bounds.

Whether or not there is a possibility of the subscriber terminal (11) accidentally receiving service from the operators of the neighboring countries is determined upon joint examination of the subscriber location and state detection unit (2), neighboring country border region monitoring unit (3) and the neighboring country border region detection unit (4).

The subscriber location and state detection unit (2) tests the location and state information of the subscriber terminal (11). It performs testing by sending MAP (Mobile Application Part) messages to the local network (7). For this it may use one of two different approaches. The first one of these is to interrogate the home location register (6) by means of the AnyTimeInterrogation (ATI) message. The home location register (6) returns, as a response, the last visitor location register information of the subscriber and the last state information it obtains by interrogating the said local visitor location register (91). This form of interrogation can be used when the location databases in the network support the AnyTimeInterrogation message. The second approach that the subscriber location and state detection unit (2) can use is to interrogate the home location register (6) and the visitor location register (91) by means of the SendRoutingInfo-forSM (SRI-SM) and ProvideSubscriberInformation (PSI) messages. In this approach, firstly the home location register (6) of the subscriber is interrogated by means of the SendRoutingInfo-forSM message, whereby the last visitor location (VLR) address of the subscriber is obtained. This visitor location address is compared with the main network border visitor location (VLR) list received from the main network border visitor location register (13). As a result of this comparison, information of whether or not the subscriber is located at the border region of the local network (7) is obtained. If the subscriber terminal (11) is located at the border region, subscriber's state is interrogated by interrogating the local visitor location register (91) by means of the ProvideSubscriberInformation message. If the subscriber is IDLE, it is understood that her/his telephone is turned on. The telephone number (MSISDN-Mobile Station International ISDN Number) information of the subscriber is required for the SendRoutingInfo-forSM and AnyTimeInterrogation messages, however there is only the IMSI (International Mobile Subscriber Identity) information of the subscriber in the incoming Update Location message. Obtaining the telephone number information of the subscriber from the IMSI information is carried out by interrogating the subscriber information database (14).

The neighboring country border region monitoring unit (3) controls whether or not the visitor location register from which the UpdateLocation message is received is located within the neighboring country border region. It performs this control by interrogating the neighboring country border region database (12). If the request is coming from the neighboring country border region database (12), since the subscriber terminal (11) is located at the inner region of the neighboring country, there is no possibility that the subscriber terminal (11) accidentally receives service from the operators of the neighboring countries.

The neighboring country border region detection unit (4) compiles the neighboring country border visitor location register (9) list. The neighboring country border region detection unit (4) is only active during the learning period of the accidental roaming prevention system (1). The accidental roaming prevention system (1) is periodically put into learning mode in certain intervals and it remains in this mode for a predetermined period of time. In learning mode, the subscriber location and state detection unit (2) interrogates the last location and state of the subscriber terminal (11) for all the messages coming from the neighboring country. This may cause unnecessary messaging load in the network due to the SendRoutingInfo-forSM and ProvideSubscriberInformation messages sent by the subscriber location and state detection unit (2). Hence the learning mode is run only in certain time intervals. In learning mode, when the last location of the subscriber terminal (11) is at the local network (7) border visitor location register (91) and when it is determined that the subscriber terminal (11) is turned on and operational, it is determined that there is a possibility of the subscriber terminal (11) accidentally receiving service from the operators of the neighboring country; and the foreign visitor location register (9) sending the UL message is added to the neighboring country border visitor location register (9) list which is provided at the neighboring country border region detection unit (4).

When realizing the invention, it is assumed that there exists no airport at the border regions of the local network (7), that the subscriber terminals (11) can not be turned on in airplanes, and that the subscriber has not displaced the battery of her/his telephone; and thus it becomes definite that the foreign visitor location registers (9) which are determined to have a possibility of accidentally receiving service from the neighboring country operators can be located only in the neighboring country border region.

When the list of local visitor location registers (91) including airports is entered into the main network border visitor location register (13) list together with the border visitor location registers (9), during control of the last location of the subscriber terminal (11), it is checked whether or not the last visitor location register is the airport visitor location register (91) and the local visitor location registers (91), which might have entered into the neighboring country border visitor location register (9) list by mistake, are removed from the list.

The learning mode is activated in daily, weekly and monthly periods and the accidental roaming prevention system (1) is ensured to remain in this mode for the adjusted period. In one embodiment of the invention, the accidental roaming prevention system (1) can also be adjusted to skip some of these periods. This way, for example by selecting the daily period, the accidental roaming prevention system (1) is ensured to enter into the learning mode for 2 days and not to enter into this mode for 3 days. Each learning mode is continued for a desired period of time.

The roaming monitoring and intervention unit (5) processes all the UpdateLocation messages coming from foreign countries and forwards the message to the local network (7) or rejects it depending on the request coming from the neighboring country border region monitoring unit (3).

When the visitor location register (9) requests service from the home location register (6), the roaming monitoring and intervention unit (5) allows the visitor location register (9) to receive service from the local network (7) if it approves the request, if it does not approve the request, sends a rejection message to the visitor location register (9).

The roaming monitoring and intervention unit (5) rejects the requests coming from the visitor location registers (9) if it determines that the subscriber terminal (11) which is the source of the request has a possibility of accidentally receiving service from the neighboring country operators.

In case of rejection, the subscriber terminal (11) repeats the request n times. Therefore, the accidental roaming prevention system (1) rejects the requests of the subscriber, whom it has rejected once upon determining a possibility of accidentally receiving service from the neighboring country operators, coming from the same network up to n times. Number n is a positive whole number and it is named as *"sequential attempt number"* parameter.

After receiving the n^{th} rejection message, the subscriber terminal (11) selects a new network and repeats its request. If the newly selected network is also a foreign network (10), the accidental roaming prevention system (1) continues to reject the requests up to the n^{th} time. The accidental roaming prevention system (1) allows change of network m times. Number m is a positive whole number and it is named as *"sequential network limit"* parameter.

If, although a predetermined number of requests are made, it is still tried to receive service from the foreign network (10), it is considered that the subscriber terminal (11) has crossed the national border and it really is in a foreign country; and the accidental roaming prevention system (1) forwards the request to the home location register (6).

Additionally, the possibility of the subscriber terminal (11) receiving accidental service is evaluated for a predetermined t period. When the said period expires, the request of the subscriber terminal (11) is accepted and it is forwarded to the home location register (6). The said period is called "inhibition duration limit" parameter.

Accidental roaming attempts may come to an end with the subscriber returning to the local network (7) after trying a certain number foreign networks (10). During these attempts, problems encountered in the local network (7) may have been resolved or the subscriber terminal (11) may have arrived at a location having a higher signal intensity.

The *"sequential attempt number", "sequential network limit"* and the *"inhibition duration limit"* parameters are adjusted according to the foreign network (10) and the subscriber profile. This way, an adjustment can be made by the operator both based on the network and taking into consideration the subscriber profile (such as postpaid, prepaid or special customer group).

It is possible to develop a wide variety of embodiments of the inventive accidental roaming prevention system (1). The invention is essentially according to the claims.

## Claims

1. An accidental roaming prevention system (1) comprising:
- a subscriber location and state detection unit (2), a neighboring country border region monitoring unit (3), a neighboring country border region detection unit (4);
- a roaming monitoring and intervention unit (5), determining that there is a possibility of the subscriber terminal (11) receiving service from the operators of the neighboring countries accidentally when take place all the conditions of:
- the visitor location register from which the subscriber terminal (11) intends to receive service being located in the neighboring country border region,
- the last location of the subscriber terminal (11) being located in the border region of the local network (7), and
- the last states of the subscriber terminal (11) showing that the subscriber terminal is not turned off;
wherein when all the conditions are taking place,
- said roaming monitoring and intervention unit (5) is configured to reject a request to receive service coming from a visitor location register (9) of an operator of a neighboring country coming from the same foreign country up to n times;
- said subscriber terminal (11) is configured to select a new network and repeating the request;
said accidental roaming prevention system (1) **characterized by** further comprising means for:
- rejecting requests up to the nₜₕ if the network is also a foreign network (10);
- allowing m times changes of networks;
- if the subscriber terminal (11) is still trying to receive service from a foreign network (10), assuming that the subscriber terminal (11) has crossed the national border and it really is in a foreign country and forwarding the request into the home location register (6).

2. An accidental roaming prevention system (1) according to claim 1 **characterized by** the fact that the roaming monitoring and intervention unit (5) is adapted to, evaluate for a predetermined t duration the possibility of the subscriber terminal (11) receiving accidental and unintentional service, and even though the request has not been repeated for the predetermined times upon expiration of the said duration, accept the request of the subscriber terminal (11) and forward the request to the home location register (6).

3. An accidental roaming prevention system (1) according to claim 1 or 2, wherein m, n, t numbers are determined according to the subscriber profile.

4. An accidental roaming prevention system (1) according to any of the preceding claims, **characterized by** the fact that the subscriber location and state detection unit (2), comprises means adapted to:
- obtain the last visitor location -VLR- address of the subscriber terminal (11) by means of MAP -Mobile Application Part- messages,
- compare this visitor location address with the border visitor location -VLR- list received from the border visitor location register (13),
- as a result of this comparison, obtain information of whether or not the subscriber terminal (11) is located at the border region of the local network (7).

5. An accidental roaming prevention system (1) according to any of the preceding claims, **characterized by** the fact the neighboring country border region monitoring unit (3) is adapted to control whether or not the visitor location register, from which the UpdateLocation message is received, is located within the neighboring country border region, by interrogating the neighboring country border region database (12).

6. An accidental roaming prevention system (1) according to any of the preceding claims, **characterized by** the fact that the neighboring country border region detection unit (4) is adapted to compile the neighboring country border visitor location register (9) list and is only active in the learning mode.

## Patentansprüche

1. Ein System zum Verhindern von zufälligem Roaming (1), das folgende Merkmale aufweist:
- eine Einheit zum Erfassen von Teilnehmerstandort und -zustand (2), eine Einheit zum Überwachen einer Nachbarlandgrenzregion (3), eine Einheit zum Erfassen einer Nachbarlandgrenzregion (4);
- eine Einheit zur Roaming-Überwachung und -Intervention (5), die festlegt, dass eine Möglichkeit besteht, dass das Teilnehmerendgerät (11) zufällig einen Dienst von den Betreibern der Nachbarländer empfängt, wenn alle der folgenden Bedingungen zutreffen:
- das Besucherstandortregister, von dem das Teilnehmerendgerät (11) einen Dienst zu empfangen beabsichtigt, befindet sich in der Nachbarlandgrenzregion,
- der letzte Standort des Teilnehmerendgeräts (11) befindet sich in der Grenzregion des lokalen Netzes (7) und
- die letzten Zustände des Teilnehmerendgeräts (11) zeigen, dass das Teilnehmerendgerät nicht ausgeschaltet ist;
wobei, wenn alle Bedingungen zutreffen:
- die Einheit zur Roaming-Überwachung und -Intervention (5) dazu konfiguriert ist, eine Anforderung zum Empfangen eines Dienstes, die von einem Besucherstandortregister (9) eines Betreibers eines Nachbarlands kommt, der aus demselben Nachbarland kommt, bis zu n-mal zurückzuweisen;
- das Teilnehmerendgerät (11) dazu konfiguriert ist, ein neues Netz auszuwählen und die Anforderung zu wiederholen;
wobei das System zum Verhindern von zufälligem Roaming (1) **dadurch gekennzeichnet ist, dass** dasselbe ferner eine Einrichtung aufweist zum:
- Zurückweisen von Anforderungen bis zu n Mal, falls das Netz ferner ein fremdes Netz (10) ist;
- Zulassen, dass Netze m-mal gewechselt werden;
- falls das Teilnehmerendgerät (11) immer noch versucht, einen Dienst von einem fremden Netz (10) zu empfangen, Annehmen, dass das das Teilnehmerendgerät (11) die Staatsgrenze überschritten hat und sich tatsächlich in einem anderen Land befindet, und Weiterleiten der Anforderung an das Heimatstandortregister (6).

2. Ein System zum Verhindern von zufälligem Roaming (1) gemäß Anspruch 1, das durch die Tatsache gekennzeichnet ist, dass die Einheit zur Roaming-Überwachung und -Intervention (5) angepasst ist, für eine vorbestimmte Dauer t die Möglichkeit zu evaluieren, dass das Teilnehmerendgerät (11) einen zufälligen und nicht beabsichtigten Dienst empfängt, und, obwohl die Anforderung nach Ablauf der Dauer nicht die vorbestimmten Male wiederholt wurde, die Anforderung des Teilnehmerendgeräts (11) zu akzeptieren und die Anforderung an das Heimatstandortregister (6) weiterzuleiten.

3. Ein System zum Verhindern von zufälligem Roaming (1) gemäß Anspruch 1 oder 2, bei dem die Zahlen m, n, t gemäß dem Teilnehmerprofil festgelegt sind.

4. Ein System zum Verhindern von zufälligem Roaming (1) gemäß einem der vorhergehenden Ansprüche, das durch die Tatsache gekennzeichnet ist, dass die Einheit zum Erfassen von Teilnehmerstandort und -zustand (2) eine Einrichtung umfasst, die angepasst ist zum:
- Erhalten der Letzter-Besucherstandort(VLR)-Adresse des Teilnehmerendgeräts (11) mittels Mobilanwendungsteil(MAP)-Nachrichten,
- Vergleichen dieser Besucherstandortadresse mit der Grenzbesucherstandort(VLR)-Liste, die von dem Grenzbesucherstandortregister (13) empfangen wird,
- als Ergebnis dieses Vergleichs, Erhalten von Informationen, ob das Teilnehmerendgerät (11) sich in der Grenzregion des lokalen Netzes (7) befindet oder nicht.

5. Ein System zum Verhindern von zufälligem Roaming (1) gemäß einem der vorhergehenden Ansprüche, das durch die Tatsache gekennzeichnet ist, dass die Einheit zum Überwachen einer Nachbarlandgrenzregion (3) angepasst ist zu steuern, ob das Besucherstandortregister, von dem die Standort-aktualisieren-Nachricht empfangen wird, sich innerhalb der Nachbarlandgrenzregion befindet oder nicht, indem die Nachbarlandgrenzregion-Datenbank (12) abgefragt wird.

6. Ein System zum Verhindern von zufälligem Roaming (1) gemäß einem der vorhergehenden Ansprüche, das durch die Tatsache gekennzeichnet ist, dass die Einheit zum Erfassen einer Nachbarlandgrenzregion (4) angepasst ist, die Liste des Nachbarlandgrenze-Besucherstandortregisters (9) zusammenzustellen, und nur im Lernmodus aktiv ist.

## Revendications

1. Système de prévention d'itinérance accidentelle (1) comprenant :
- une unité de détection de position et d'état d'un abonné (2), une unité de surveillance des régions frontalières avec un pays voisin (3), une unité de détection de région frontalière avec un pays voisin (4) ;
- une unité de surveillance et d'intervention pour itinérance (5), déterminant qu'il existe une possibilité que le terminal d'abonné (11) reçoive accidentellement un service en provenance des opérateurs des pays voisins lorsque toutes les conditions suivantes sont réunies :
- le registre de position des visiteurs en provenance duquel le terminal d'abonné (11) prévoit de recevoir un service est situé dans la région frontalière du pays voisin,
- la dernière position du terminal d'abonné (11) se trouve dans la région frontalière du réseau local (7), et
- les derniers états du terminal d'abonné (11) montrent que le terminal d'abonné n'est pas éteint ;
dans lequel lorsque toutes les conditions sont réunies,
- ladite unité de surveillance et d'intervention pour itinérance (5) est configurée pour refuser une demande de réception de service émanant d'un registre de position des visiteurs (9) d'un opérateur d'un pays voisin provenant du même pays étranger jusqu'à n fois ;
- ledit terminal d'abonné (11) est configuré pour choisir un nouveau réseau et réitérer la demande ;
ledit système de prévention d'itinérance accidentelle (1) étant **caractérisé en ce qu'**il comprend en outre des moyens pour :
- refuser des demandes jusqu'à la n^{ième} si le réseau est également un réseau étranger (10) ;
- autoriser m fois des changements de réseaux ;
- si le terminal d'abonné (11) tente toujours de recevoir un service en provenance d'un réseau étranger (10), supposer que le terminal d'abonné (11) a passé la frontière nationale et qu'il se trouve réellement dans un pays étranger et transmettre la demande à l'enregistreur de localisation nominal (6).

2. Système de prévention d'itinérance accidentelle (1) selon la revendication 1 **caractérisé par le fait que** l'unité de surveillance et d'intervention pour itinérance (5) est adaptée pour évaluer pendant une durée t prédéterminée la possibilité que le terminal d'abonné (11) reçoive un service accidentel et involontaire et, bien que la demande n'ait pas été réitérée le nombre de fois prédéterminé à l'expiration de ladite durée, accepter la demande du terminal d'abonné (11) et transmettre la demande à l'enregistreur de localisation nominal (6).

3. Système de prévention d'itinérance accidentelle (1) selon la revendication 1 ou 2, dans lequel les nombres m, n, t sont déterminés en fonction du profil d'abonné.

4. Système de prévention d'itinérance accidentelle (1) selon l'une quelconque des revendications précédentes, **caractérisé par le fait que** l'unité de détection de position et d'état de l'abonné (2) comprend des moyens adaptés pour :
- obtenir la dernière adresse de position de visiteur (VLR) du terminal d'abonné (11) au moyen de messages d'applicatif du service mobile (MAP),
- comparer cette adresse de position de visiteur à la liste des positions de visiteurs frontaliers (VLR) reçue en provenance du registre de position des visiteurs frontaliers (13)
- par suite de cette comparaison, obtenir des informations indiquant si le terminal d'abonné (11) se trouve ou non dans la région frontalière du réseau local (7) .

5. Système de prévention d'itinérance accidentelle (1) selon l'une quelconque des revendications précédentes, **caractérisé par le fait que** l'unité de surveillance des régions frontalières avec un pays voisin (3) est adaptée pour vérifier si le registre de position des visiteurs en provenance duquel est reçu le message de mise à jour de position se trouve ou non dans la région frontalière du pays voisin, en interrogeant la base de données des régions frontalières du pays voisin (12).

6. Système de prévention d'itinérance accidentelle (1) selon l'une quelconque des revendications précédentes, **caractérisé par le fait que** l'unité de détection de région frontalière avec un pays voisin (4) est adaptée pour dresser la liste du registre de position des visiteurs frontaliers du pays voisins (9) et est active seulement dans le mode d'apprentissage.
